# EUROPEAN PATENT SPECIFICATION

(11) **EP 2 816 552 B1**
(45) Date of publication and mention of the grant of the patent: **17.10.2018**
(21) Application number: 13173059.0
(22) Date of filing: 20.06.2013
(51) Int. Cl.: G10L 15/18, G06F 17/27, G10L 15/32, G06F 17/30, G10L 15/19, G10L 15/22

(54) **Conditional multipass automatic speech recognition**
Automatische Spracherkennung mit bedingter Mehrstufigkeit
Reconnaissance vocale automatique en mode multipass conditionnelle

(43) Date of publication of application: 24.12.2014
(73) Proprietor: 2236008 Ontario Inc., Waterloo, ON N2K 0A7 (CA)
(72) Inventor: Fry, Darrin Kenneth John, Kanata, Ontario K2K 0B3 (CA)
(74) Representative: Roberts, Gwilym Vaughan

(56) References cited:
- WO-A1-2009/145796
- US-A1- 2011 029 311
- US-B1- 6 487 534

## Description

### CROSS REFERENCES TO RELATED APPLICATIONS

This application makes reference to:
United States Patent Application Serial No. 13/460,443, titled "Multipass ASR Controlling Multiple Applications," filed April 30, 2012;
United States Patent Application Serial No. 13/460,462, titled "Post Processing of Natural Language ASR," filed on April 30, 2012; and
United States Patent Application Serial No. 13/679,654, titled "Application Services Interface to ASR," filed November 16, 2012.

### BACKGROUND OF THE INVENTION

### 1. Technical Field

This disclosure relates to voice recognition and more particularly to automatic speech recognition technology that uses recognition resources efficiently.

### 2. Related Art

Automatic Speech Recognition (ASR) allows devices to listen to spoken language to determine what has been said. It determines what words, phrases, or sentences are spoken by processing and analyzing speech to produce a recognition result.

Many electronic devices host voice enabled applications and utilize speech recognition to determine which application to run and to provide input to the application. Spoken utterances may be used to activate or interact with the applications, for example to provide parameters used by an application to perform a specified function. A device may support a variety of voice enabled applications. For example, a portable phone or an in-vehicle hands-free module may support voice enabled phone dialing, email, texting, navigation, searching and booking events such as restaurants, movies, ticketed events or travel accommodations. An automatic speech recognition (ASR) engine may be utilized to determine words, phrases and/or sentences that are spoken in order to run the applications on the device. The ASR may compare spoken words to a stored vocabulary or grammar of words or phrases. Speech recognition results may be limited by the extent of the ASR vocabulary. In some instances an ASR grammar may be limited to words pertaining to specified actions that a device may perform. For example, words in a grammar may function as commands for a particular application or pertain to a particular context. More extensive grammars or vocabularies may enable interpretation of naturally spoken language for a broader transcription capability. Some more powerful ASRs may handle naturally spoken language and/or a variety of languages, dialects and accents.

When software or applications include speech recognition capability, the application's ability to determine what has been said may be limited. Such systems may recognize limited vocabularies or may only recognize speech spoken by certain users because of limited resources. The systems may not respond to certain speech patterns, accents, variety in the way commands are worded, or a language which is used.

Systems and methods aiming to overcome such limitations are, inter alia, disclosed in WO 2009/145796 A1 and US 2011/0029311 A1.

### BRIEF DESCRIPTION OF THE DRAWINGS

The present invention is defined by the appended claims and can be better understood with reference to the following drawings and description. The components in the figures are not necessarily to scale, emphasis instead being placed upon illustrating the principles of the invention. Moreover, in the figures, like referenced numerals designate corresponding parts throughout the different views.
Figure 1 is a block diagram of a conditional multipass automatic speech recognition system.
Figure 2 illustrates a plurality of intents and corresponding intent parameters.
Figure 3 is a flow chart of exemplary steps in a conditional multipass automatic speech recognition operation.
Figure 4 is a flow chart of exemplary steps in a conditional multipass automatic speech recognition operation where an ASR module second pass is not utilized.
Figure 5 is a flow chart of exemplary steps in a conditional multipass automatic speech recognition operation where a conditional ASR second pass is utilized.

### DETAILED DESCRIPTION OF THE PREFERRED EMBODIMENTS

A limited or contextual grammar based automatic speech recognition module (ASR) may be all that is required by an application to interpret a given audio waveform derived from a spoken utterance. A grammar based ASR may provide high confidence recognition to a subset of the words within the audio waveform and low confidence recognition or no recognition of other words. The application receiving text results from the ASR may, in some instances, use only the high confidence recognized words. If the low confidence text is not utilized by the application there may be no need to process the audio waveform again with a more powerful ASR system. Only when the application indicates the need to utilize the low confidence recognition or unrecognized text does the computing device send the audio waveform to another ASR for a second or more pass of speech recognition. In some instances, the entire audio waveform may be re-processed by the second or more ASRs. In other instances, only the low confidence or unrecognized portions of the audio waveform may be re-processed. In a further alternative, the second or more ASRs may process the audio waveform using the recognition results from a prior pass of automatic speech recognition.

In a first speech recognition pass, a speech engine may receive frames of a spoken utterance (e.g., audio speech frames) from a region of memory reserved for use as an intermediate repository in which data or signals that represent the speech utterances are temporarily held, while waiting to be transferred to other locations. The speech engine may compare the spoken utterances to a list of words and phrases that are available to the speech engine for speech recognition. Some ASR systems may only recognize keywords and/or key phrases that are associated with an application or subsystem and may be referred to as grammar based ASRs. Natural language ASRs or transcription services may be operable to process speech associated with many systems or sub-systems. The conditional multipass ASR may efficiently utilize a range of ASR resources, as needed, to respond to voice input, for example, to place a phone call, ask a navigation system for directions, or make a multi-media selection. The conditional multipass technology may be operable to process multiple words, phrases, sentences, or even several sentences as needed for one or more applications.

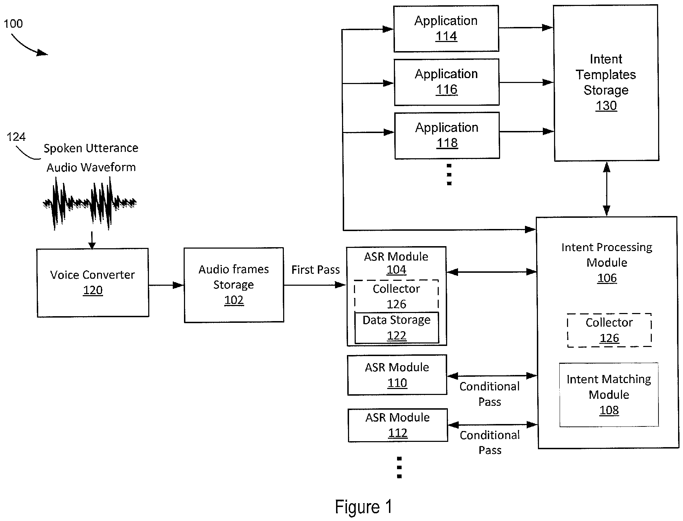

Now turning to the figures, Figure 1 is a block diagram of a conditional multipass automatic speech recognition (ASR) system 100. The conditional multipass ASR system 100 may comprise a number of elements including a voice converter 120, an audio frames storage 102, automatic speech recognition (ASR) modules 104, 110 and 112, a collector 126 and a data storage 122. The speech enabled system elements may also include an intent processing module 106, an intent matching module 108, an intent templates storage 130 and any suitable number of applications, for example, applications 114, 116 and 118. The ASR modules may be referred to as ASR engines or speech engines, for example.

The elements of the conditional multipass ASR system 100 shown in Figure 1 may all reside on a single device or in some systems, one or more of the elements may reside on remote or distributed devices. In one example, all of the conditional multipass ASR system 100 elements except for the ASRs 110 and 112, may reside on a single device, for example, a smart phone or hands-free vehicle system, while the ASR 110 and the ASR 112 may be distributed in a cloud system and/or accessible via a network. In another exemplary system, one or more of the applications 114, 116 and 118 may reside in a remote or distributed system and may be controlled by a device comprising one or more of the remaining conditional multipass ASR system 100 elements. However, the conditional multipass ASR system 100 is not limited with regard to how the constituent elements are distributed or integrated.

Each of the elements of the conditional multipass ASR system 100 may comprise any suitable logic, code, circuitry and/or interfaces that may support voice enabled applications such as the applications 114, 116 and 118. Two or more of the elements of the conditional multipass ASR system 100 may communicate utilizing application program interfaces (APIs).

The applications 114, 116 and/or 118 may comprise a software, firmware or hardware program or a portion thereof, executed by a processor, which may assist in the performance or the execution of a specific task such as controlling a device or a process where the device or process may function locally or remotely relative to a device hosting all or a portion of the conditional multipass ASR 100 system. In some systems, the applications 114, 116 and 118 may perform functions in a voice enabled device, for example, phone dialing, email messaging, texting, vehicle systems control, navigation, Internet searching and booking events such as restaurants, movies, ticketed events or travel accommodations. However, the system is not limited with regard to any specific type of application. Some exemplary voice enabled or "hands-free" devices which may host the applications 114, 116 and 118 may include, for example, smartphones and handheld wireless devices, portable or stationary computer systems, land based or aerospace vehicle systems, medical diagnostic or record systems and any other devices that may interface or include automatic speech recognition. Although three applications, 114, 116 and 118 are shown in Figure 1, the conditional multipass ASR system 100 may include any suitable one or more applications.

The voice converter 120 may receive a spoken utterance 124 and may generate frames or segments of audio information including an analog signal or digital data that may represent the spoken utterance 124. The voice converter 120 may be communicatively coupled to the audio frames storage 102. A region in memory or a buffer in the audio frames storage 102 may hold the audio frames received from the voice converter 120, prior to transfer of the audio frames to the ASR module 104. The audio frames may also be transferred from the audio frames storage 102 to the ASR 110 or ASR 112. In some systems, one or more of the ASRs, for example, the ASRs 110 and 112 may be distributed on devices remote from the voice converter 120 and may be communicatively coupled via a network.

The ASR modules 104, 110 and 112 may be operable to capture speech signal dynamics by processing the audio frames of speech input in real-time and/or after a delay of time. A real-time operation may comprise an operation occurring at rate that may be easily consumed or understood according to human perception, or a process that may occur at the same rate (or perceived to be at the same rate) as a physical process. Each of the ASR modules 104, 110 and 112 may match sound parts of the audio frames to words or phrases stored in a grammar or vocabulary file. Although three representative ASR modules 104, 110 and 112 are shown in Figure 1, the conditional multipass ASR system 100 may comprise or may interface to any suitable one or more ASR modules to perform multiple passes of automatic speech recognition. The ASR modules 104, 110 and 112 may utilize different methods of speech recognition, for example, grammar based, natural language based or any speech transcription system. A grammar based ASR may compare audio frames to a more limited vocabulary, for example, a vocabulary including language most likely to be used as commands in one or more of the applications 114, 116 and 118. A natural language ASR or a speech transcription service may compare the audio frames to larger vocabularies which may allow a user to speak more naturally or freely when activating or controlling a voice enabled device or application.

One or more of the ASR modules 104, 110 and 112 may comprise a local memory and may store one or more grammar or vocabulary files in the local memory, for example, the local data store 122 as shown in the ASR 104. Moreover, one or more of the ASR modules 104, 110 and 112 may utilize one or more grammar or vocabulary files stored in a remote or distributed memory, for example, in a cloud system. Furthermore, one or more of the ASR modules 104, 110 and 112 may utilize a local or distributed database. The database structure may support a database sublanguage (e.g., structured query language, for example) that may be used for querying, updating, and managing data stored in a local or distributed memory of the databases. The database may be accessible through a database engine or APIs between the database and one or more of the ASR modules 104, 110, and 112, which may handle requests for database actions, control database security and/or control data integrity requirements. A cloud system or cloud based computing may refer to a scalable platform that provides a combination of services including computing, durable storage of both structured and unstructured data, network connectivity and other services. Services provided by a cloud system or cloud based computing may be interacted with (provisioned, de-provisioned, or otherwise controlled) via Application Program Interfaces or APIs in the conditional multipass ASR system 100.

One or more of the ASRs 104, 110 and 112 may comprise a collector module 126 that may be operable to determine which audio frames generated by the voice converter 120, are unrecognizable or have a low confidence level. The collector module 126 may bracket a sequence of the unrecognizable or low confidence audio frames or may bracket a single frame, with a beginning time and ending time associated with the unrecognized or low confidence frames. The bracketed unrecognized or low confidence frames may be provided to the intent processing module 106 and/or one or more of the applications 114, 116 and 118.

Additional details and descriptions regarding automatic speech recognition systems that may be part of the conditional multipass ASR system 100 may be found in United States Patent Application Serial No. 13/460,443, which was filed April 30, 2012 and United States Patent Application Serial No. 13/460,462, which was filed April 30, 2012.

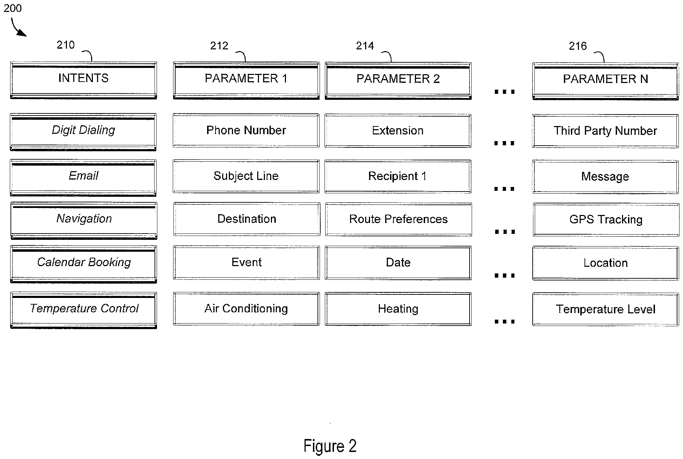

The conditional multipass ASR system 100 may utilize an intent for managing a voice enabled functions. An intent may describe, may indicate or may be associated with one or more actions or functions that an application may perform or that a spoken utterance may specify. For example, intents may describe functions such as digit dialing, email, texting, vehicle systems control, navigation, Internet searching and calendar booking. Intents may be associated with various parameters that may indicate how to perform a function, or may be used to configure an application to perform an action or function in a specified way. For example, an email intent may be associated with parameters including a subject line, one or more recipients, a message, an attachment and a level of importance. Figure 2 lists a plurality of intents and corresponding intent parameters. The first column 210 of Figure 2 represents the plurality of intents. The subsequent columns 212, 214 and 216 represent parameters associated with each intent. Some intents may not be associated with any parameters. Other intents may be associated with one or more parameters. Each of the applications 114, 116 and 118 may utilize or support, one or more intents.

In some systems, one or more of the applications 114, 116 and 118 may provide one or more intent templates that may be used by the intent processing module 106 and/or one or more of the ASRs 104, 110 and 112. The intent templates may be stored in the intent templates storage 130. An intent template may specify a particular intent and may comprise one or more fields that indicate which parameters an application may utilize to perform functions of the specified intent. The intent template may specify language which is expected or understood by the application. Moreover, an intent template may specify an intent name and/or an intent identifier (ID). When processing and/or analyzing voice frames, the intent processing module 106 and/or the one or more ASRs 104, 110 and 112 may detect parameter values or words in the voice frames that correspond to the specified intent template fields. The detected parameter values may be normalized to comply with the language understood by the applications and may be returned to the appropriate one or more applications. The parameter values may be returned in prescribed or organized fields in accordance with the intent template specifications. The applications 114, 116 and 118 may receive the intent parameters as text, numerical data or other information from the intent processing module 106 or one or more of the ASR modules 104, 110 and 112. The returned intent parameters may be utilized as commands or for configuration information by one or more of the applications 114, 116 and 118. For example, the intent parameters may provide information on how to perform an action.

Furthermore, ASR 104, 110 and/or 112 vocabularies or grammars may add words or phrases that are associated with the language of the intents and/or the intent parameters. A variety of words and/or phrases may correspond to one intent or to one intent parameter. For example, in some systems, an ASR vocabulary may include the words "email," "message" and "note." An email intent may be indicated by a recognized audio frame comprising any of the words: "email," "note" or "message." Moreover, in some systems, information stored in files on a device, may be added to grammars or vocabularies used by an ASR. For example, a device may store a contact list with names, phone numbers and/or email addresses. This information may be communicated to the ASR 104 and stored in the data store 122 or in another data store accessible by one or more of the ASRs 104, 110 and 112, to be used in speech recognition.

The intent processing module 106 may receive recognized words or phrases from one or more of the ASRs 104, 110 and 112 and may compare them to words or phrases associated with the intents and/or the intent parameters in the intent matching module 108. In instances when the intent matching module 108 finds a sufficient match between recognized audio frame words or phrases and an intent or intent parameters, the intent processing module 106 may communicate the intent and/or intent parameters to one or more of the applications 114, 116 and 118 that may support the intent and/or the intent parameters.

In some conditional multipass ASR systems 100, the intent processing module 106 and/or one or more of the applications 114, 116 and 118 may support text to speech prompts which may be communicated to a user for gathering audio frames into specified fields for one or more of the applications 114, 116 and 118. The fields of recognized audio may operate as commands or configuration parameters for the applications. For example, an email application may prompt a user to enter an email message by speaking into a microphone. Additional details and descriptions regarding intents that may be a part of the conditional multipass ASR system 100 may be found in United States Patent Application Serial No. 13/679,654, titled "Application Services Interface to ASR," filed November 16, 2012.

In one illustrative example of a conditional multipass ASR system 100 operation, a smart phone may comprise an on-board ASR 104 which may have a vocabulary stored in the data storage 122. The voice converter 120, the audio frames storage 102, the intent processing module 106, the intent matching module 108 and the intent templates storage 130 may also reside on-board the smart phone. The ASR 110 may be an off-board system residing on a network server which is accessible by the smart phone via a network, for example, via a wireless network and the Internet. The ASR 110 may comprise or have access to a database comprising a much larger vocabulary than the vocabulary stored in the data storage 122 and may provide a transcription language service. A user may download the applications 114, 116 and 118 to conditional multipass ASR system 100 on the smart phone. One or more of the applications 114, 116 and 118 may provide intent templates including intent identifiers and intent parameters to the intent templates storage 130. For example, the application 114 may provide an email intent with six intent parameters fields. A spoken utterance 124 may be received by the voice converter 120 including "send Bob the papers we received last week including document dot doc" which may be converted into a plurality of audio frames and stored in the audio frames storage 102. The audio frames may be accessed by the on-board ASR 104. The ASR 104 may recognize a portion of the audio frames and may not recognize another portion of the audio frames. The ASR 104 may provide to the intent processing module 106, the recognized audio frames and confidence scores associated with each of the recognized audio frames. The collector 126 may reside in the ASR 104 or the intent processing module 106, for example. The collector 126 may receive the ASR 104 results and may bracket the unrecognized audio frames with the beginning and/or ending times of the unrecognized audio frames. The bracketed unrecognized audio frames may be processed by the intent processing module 106. The intent processing module 106 may use the intent matching module 108 to compare the recognized audio frames with one or more intents and/or one or more intent parameter fields from the intent templates storage module 130. The intent processing module 106 may determine that the recognized audio frames indicate the "email" intent. The intent processing module 106 may determine one or more email intent parameters and may place the email intent and any recognized email intent parameters into corresponding email intent template fields for communication to the application 114. The words placed in the fields may be different than the words of the recognized audio frames. For example, the uttered word "send" may be transposed or normalized by the intent processing module 106 to become the word "email" which may be a parameter specified by and/or understood by the application 114. The intent processing module 106 may look-up the name "Bob" in an address book residing on-board the smart phone and may transpose the name to an email address and place it in one or more of the intent template fields. In instances when one or more of the email intent parameters are not matched to the recognized audio frames, the intent matching module 106 may gather the bracketed unrecognized audio frames into the intent template fields corresponding to the unmatched parameters. The intent template including the matched and unmatched parameter fields may be provided to the application 114 which may support the determined email intent. In instances when the application 114 is satisfied with the information provided in the intent template, the application 114 may perform a function in accordance with the intent utilizing the recognized intent parameters. For example, the fields in the intent template may provide enough information to send an email to a specified recipient. However, in some instances, the application 114 may request additional information regarding the fields of unrecognized audio frames. In this instance, the application 114 may provide the bracketed unrecognized audio frames to the intent processing module 106 which may send the unrecognized audio frames to the ASR 110 via a network for additional speech recognition services. The ASR 110 may determine and return newly recognized audio frames from the bracketed unrecognized frames and may return a reduced set of bracketed unrecognized audio frames to the intent processing module 106. The intent processing module 106 may match the newly recognized audio frames to one or more of the remaining email intent template parameters and may return newly determined parameters and/or the reduced bracketed unrecognized parameter in the appropriate fields to the Application 114. For example, the ASR 104 may not have recognized the word "dot" in the audio frames, however, the ASR 110 may have returned "dot" to the intent processing module 106. The intent processing module 106 may determine that the words "document dot doc" from the spoken utterance may indicate a stored document that may be attached to the email to be sent to Bob and may place the appropriate parameter in a corresponding "attachment" intent template field and return it to the application 114. This ASR 110 speech recognition attempt may constitute a second conditional pass of selected audio frames. Additional conditional passes may be requested by the application 114 until sufficient information is obtained to perform the email function indicated by the email intent. The recognition process may be repeated a third time using the ASR 112 or more times with additional ASRs until the Application 114 is satisfied. Moreover, all of the audio frames that were stored in the audio frames storage 102 may be provided to one or more of the ASRs 110 and 112 to supplement a speech recognition process. In another alternative method, the results from a prior pass of an ASR, including recognized and/or unrecognized audio frames, may be used as input for the subsequent passes of speech recognition. Since the ASRs 110 and 112 may comprise different vocabularies or grammars than the ASR 104, they may be operable to recognize additional audio frames. In some systems, the application 114 may prompt a user for specific information, for example, using text to speech technology. The application 114 may be operable to ask the user to dictate a message for the email, for example.

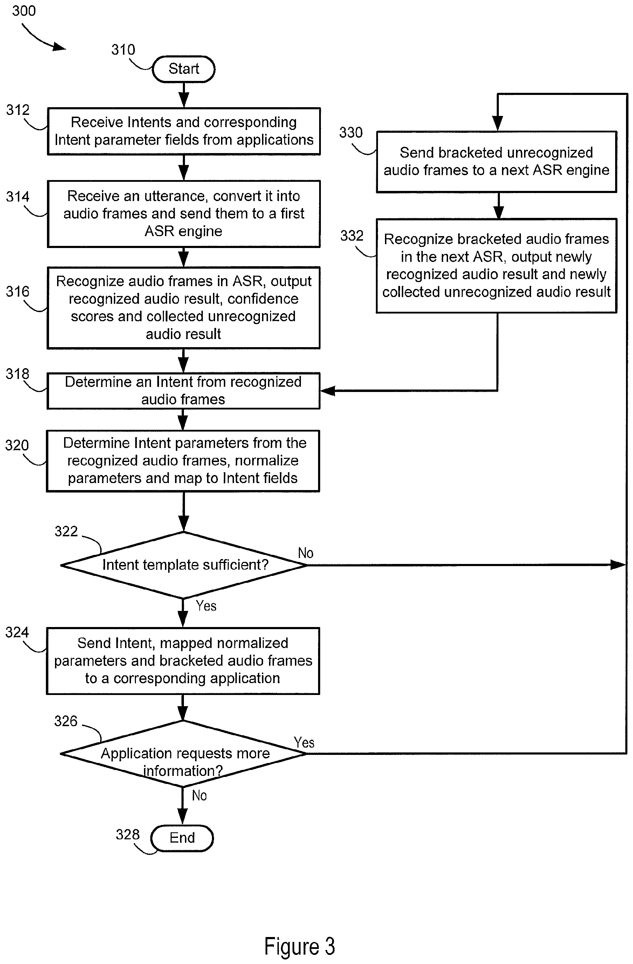

Figure 3 is a flow chart of exemplary steps in a conditional multipass automatic speech recognition operation. Referring to Figure 3, the exemplary steps may begin at start step 310. In step 312, the intent processing module 106 may receive one or more intent templates including intent identifiers and corresponding intent parameter fields from one or more of the applications 114, 116 and 118. In step 314, the voice converter 120 may receive a spoken utterance and may convert it into one or more audio frames and store the audio frames in the audio frames storage 102 where the ASR 104 may retrieve the audio frames. In step 316, the ASR 104 may perform speech recognition. For example, the ASR 104 may compare the audio frames to a vocabulary that is stored locally or accessible via a network. The recognized audio frames may be associated with a confidence score. The collector 126 may bracket unrecognized or low confidence audio frames. The ASR 104 may output the recognized frames result and the bracketed unrecognized frames result to the intent processing module 106. In step 318, the intent matching module 108 may compare the recognized frames result to one or more intent templates and may determine an intent corresponding to the recognized audio frames result. In step 320, the intent matching module 108 may compare the recognized audio frames result to intent template parameters that correspond to the determined intent and may determine which parameters are present. The intent processing module 106 may normalize or transpose the recognized audio frames results to match the intent template parameters and may map each of the intent parameters to a corresponding intent template field. In step 322, in instances when the intent processing module 106 determines that the intent and the intent parameter fields are sufficiently ready to provide to one or more of the applications 114, 116 and 118, the exemplary steps may proceed to step 324. In step 324, the intent identifier, the normalized intent parameters and the bracketed unrecognized audio frames result may be provided to one or more of the applications 114, 116 and 118. In step 326, in instances when the one or more applications 114, 116 and 118 does not request additional information from the intent processing module 106, the exemplary steps may proceed to the end step 328.

In step 322, in instances when the intent processing module 106 determines that the intent and the intent parameter fields are not sufficiently ready to provide to one or more of the applications 114, 116 and 118, the exemplary steps may proceed to step 330. In step 330, the intent processing module 106 may send the bracketed unrecognized audio frames result to a next ASR module, for example, the ASR module 110. In step 332, the next ASR module may perform speech recognition on the bracketed unrecognized audio frames result and may return a newly recognized audio frames result and/or a new or reduced unrecognized audio frames result to the intent processing module 106 or to one or more of the applications 114, 116 and 118. The exemplary steps may proceed to step 318.

In step 326, in instances when the one or more applications 114, 116 and 118 request additional information from the intent processing module 106, the exemplary steps may proceed to step 330.

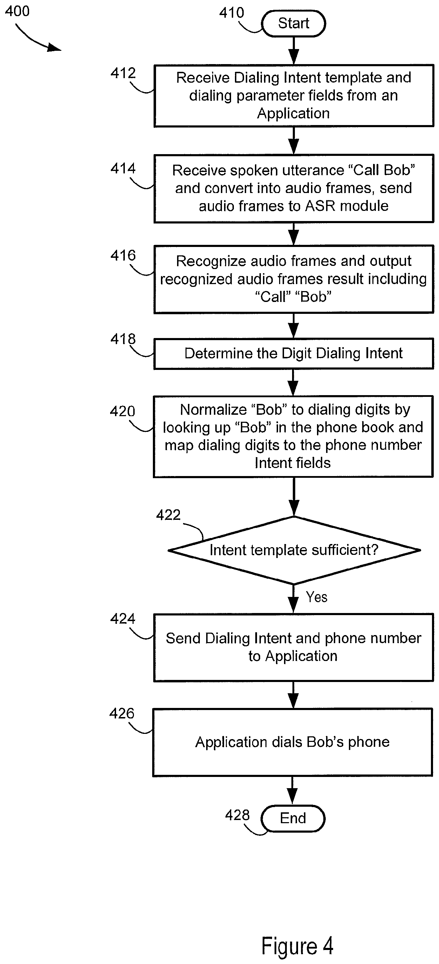

Figure 4 is a flow chart of exemplary steps in a conditional multipass automatic speech recognition system operation where an ASR module second pass is not utilized. Referring to Figure 4, the exemplary steps may begin at start step 410. In step 412, the intent processing module 106 may receive a digit dialing intent template and corresponding dialing parameter fields from the application 116. In step 414, the voice converter 120 may receive a spoken utterance comprising "Call Bob," may convert the utterance to audio frames and provide the audio frames to the ASR 104. In step 416, the ASR module 104 may perform speech recognition and output audio frames result including "call" and "Bob." In step 418, the intent matching module 108 may compare the recognized audio frames to one or more intent templates and may select the digit dialing intent. In step 420, the intent processing module 106 may normalize the word Bob to an intent parameter including a set of dialing digits by looking up Bob in a phone book which may be stored locally. The intent processing module 106 may map the normalized digit dialing intent parameter to a digit dialing intent template field. In step 422, the intent module 106 may determine that the digit dialing intent template is sufficiently populated and the exemplary steps may proceed to step 424. In step 424, the populated digit dialing intent template may be provided to the application 116. In step 426, the application 116 may dial Bob's phone number. The exemplary steps may end at step 428.

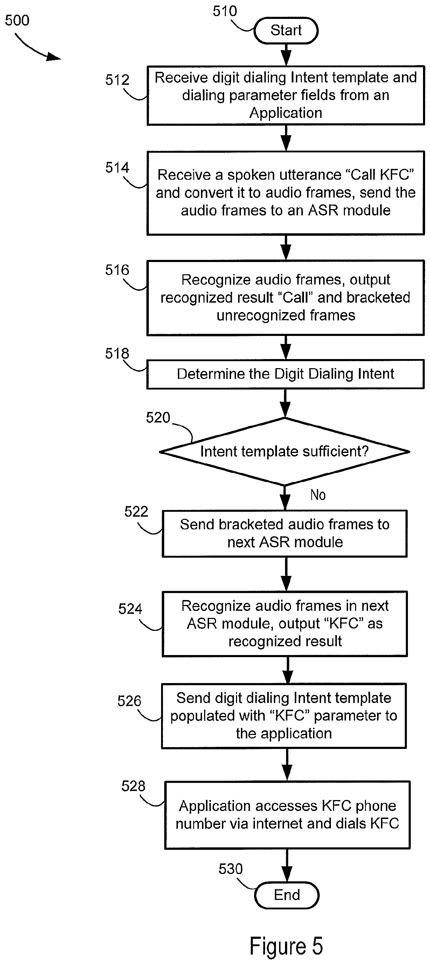

Figure 5 is a flow chart of exemplary steps in a conditional multipass automatic speech recognition system operation where a conditional ASR second pass is utilized. Referring to Figure 5, the exemplary steps may begin at start step 510. In step 512, the intent processing module 106 may receive a digit dialing intent template and corresponding dialing parameter fields from the application 116. In step 514, the voice converter 120 may receive a spoken utterance comprising "Call KFC," may convert the utterance to audio frames and provide the audio frames to the ASR 104. In step 516, the ASR module 104 may perform speech recognition on the audio frames and output audio frames recognized result including "call" and a bracketed unrecognized audio frames result including "KFC." In step 518, the intent matching module 108 may compare the recognized audio frames result to one or more intent templates and may select the digit dialing intent. In step 520, the intent processing module 106 may determine that the digit dialing intent template is not sufficiently populated and the exemplary steps may proceed to step 522. In step 522, the intent processing module 106 may provide the bracketed unrecognized audio frames to the ASR 112. In step 524, the ASR 112 may perform speech recognition and identify the spoken letters "KFC" and provide the recognized audio frame result to the intent processing module 106. In step 526, the intent processing module 106 may provide the digit dialing intent template populated with "KFC" in the phone number parameter field to the application 116. In step 528, the application may be operable to access a phone number for KFC via an Internet search, for example, and may dial the number to KFC. The exemplary steps may end at step 530.

While each of the systems, engines, methods, and descriptions described may stand alone they also may be encompassed within other systems and applications. Other alternate systems may include any combinations of structure and functions described above or shown in one or more or each of the figures. These systems or methods are formed from any combination of structure and function described. The structures and functions may process additional or different input. For example, each of the systems and processes described may include other instances of ASR's (e.g., natural language-based ASRs and other grammar-based ASRs), processors and converters at other processes and other stages that may be structured in a hierarchal order. Moreover, some processes may occur in a sequential order in real-time.

The elements, systems, engines, methods, modules, applications and descriptions described herein may also be programmed in one or more controllers, devices, signal processors, general processors, specialized processors and one or more processors and a coprocessor (e.g., a coprocessor is a processor distinct from a main processor, that performs additional functions to assist the main processor). The processors may be arranged in a parallel processing structure and/or multiprocessing structure. Parallel processing may run on a computer containing two or more processors running simultaneously. Parallel processing differs from multiprocessing in the way a task may be distributed. In multiprocessing systems, one processor may manage the conversion of spoken frames into analog data, another may manage the first pass ASR engines, and a third may manage a second pass ASR engine. Alternatively, each of the conditional multipass ASR system 100 modules or elements described herein may run on virtual machines in which one, two, etc. or all of the elements are isolated on a complete system platform that supports the execution of a complete operating system (OS). The virtual machines may be limited to the resources and abstractions provided by the particular virtual machine. Some virtual machines may not break out of their isolated virtual worlds to access more resources. In yet another alternative, each of the conditional multipass ASR system 100 modules or elements described herein may be executed by a multitasking processor executing multiple computer threads (e.g., multithreading). In yet another alternative, each of the ASR's may be executed by a single speech engine (e.g., single ASR system) that compares a spoken utterance to different vocabularies. The vocabularies may comprise all of the intents' words and phrases. Thus, if an exemplary figure 1 were implemented by one ASR speech engine, the speech engine would access three vocabularies: 1) a reduced grammar or sub-grammar vocabulary; 2) a vocabulary A; and 3) a vocabulary B.

The engines may comprise a processor or a portion of a program that executes or supports an ASR system or process. The processor may comprise one, two, or more central processing units that execute the instruction code, mine speech data, and access data from memory that generate, support, and/or complete an operation, compression, or signal modifications. The ASR modules may support and define the functions of a processor that is customized by instruction code (and in some applications may be resident to any ASR enabled systems that may include vehicles, communication systems, medical systems, audio systems, telephones, teleconferencing systems, etc.). In some systems, a front-end processor may perform the complementary tasks of capturing audio or speech for a processor or program to work with, and for making the audio frames and results available to back-end ASR processors, controllers, engines, or devices.

In some systems, the elements, systems, methods, modules, engines, applications and descriptions described herein may be encoded in a non-transitory signal bearing storage medium, a computer-readable medium, or may comprise logic stored in a memory that may be accessible through an interface and is executable by one or more processors. Some signal-bearing storage medium or computer-readable medium comprise a memory that is unitary or separate (e.g., local or remote) from ASR enabled devices such as such as cell phones, wireless phones, personal digital assistants, two-way pagers, smartphones, portable computers, vehicle based devices, medical diagnostic systems, medical record systems, and any other devices that interface or include ASR technology. If the descriptions or methods are performed by software, the software or logic may reside in a memory resident to or interfaced to the one or more processors, devices, or controllers that may support a tangible or visual communication interface (e.g., to a display), wireless communication interface, or a wireless system.

The memory may retain an ordered listing of executable instructions for implementing logical functions. A logical function may be implemented through digital circuitry, through source code, or through analog circuitry. A "computer-readable storage medium," "machine-readable medium," "propagated-signal" medium, and/or "signal-bearing medium" may comprise a non-transitory medium that stores, communicates, propagates, or transports software or data for use by or in connection with an instruction executable system, apparatus, or device. The machine-readable medium may selectively be, but not limited to, an electronic, magnetic, optical, electromagnetic, infrared, or semiconductor system, apparatus, device, or propagation medium. A non-exhaustive list of examples of a machine-readable medium would include: an electrical connection having one or more wires, a portable magnetic or optical disk, a volatile memory, such as a Random Access Memory (RAM), a Read-Only Memory (ROM), an Erasable Programmable Read-Only Memory (EPROM or Flash memory), or an optical fiber. A machine-readable medium may also include a tangible medium, as the software may be electronically stored as an image or in another format (e.g., through an optical scan), then compiled, and/or interpreted or otherwise processed. The processed medium may then be stored in a memory or database accessible by a database engine that provides access to a database management system. When such devices are responsive to such commands events, and/or requests, the actions and/or steps of the devices, such as the operations that devices are performing, necessarily occur as a direct or indirect result of the preceding commands, events, actions, and/or requests. In other words, the operations occur as a result of the preceding operations. A device that is responsive to another requires more than an action "(i.e., the device's response) to...." merely follow another action.

Other systems, methods, features and advantages will be, or will become, apparent to one with skill in the art upon examination of the figures and detailed description. It is intended that all such additional systems, methods, features and advantages be included within this description, be within the scope of the invention, and be protected by the following claims.

Aspects and features of the present disclosure are set out in the following numbered items:
16. The system wherein each of said one or more intent templates comprises one or more intent parameter fields.
17. The system wherein said one or more corresponding intent parameters maps to one or more intent parameter fields of said determined one of said one or more intent templates.
18. The system wherein said one or more processors or circuits are operable to compare said recognized speech results to said one or more intent templates.
19. The system wherein said one or more processors or circuits are operable to select said one of said one or more intent templates and said one or more corresponding intent parameters based on said comparing.
20. The system wherein said one or more processors or circuits are operable to transpose said recognized speech results to generate said one or more corresponding intent parameters.

## Claims

1. A method of conditional multipass automatic speech recognition, the method comprising:
receiving one or more intent templates (200), wherein an intent template specifies an intent (210) and comprises one or more fields that indicate parameters (212-216) an application utilizes to perform a function of the intent (312, 412, 512);
receiving a spoken utterance and generating one or more audio frames based on said spoken utterance (124, 120, 102, 314);
comparing said one or more audio frames to a first grammar (316, 104);
generating recognized speech results based on said comparing;
bracketing and collecting audio frames of said one or more audio frames, which are determined to be unrecognized or low confidence audio frames based on said comparing of said one or more audio frames to said first grammar (316, 516);
determining, based on said recognized speech results, one of said one or more intent templates (200) and one or more corresponding intent parameters (212-216, 318, 320); and
conditionally comparing only said bracketed and collected unrecognized or low confidence audio frames to a second grammar in instances when additional information relative to said one of said one or more intent templates (200) or one or more corresponding intent parameters (212-216), is requested (326, 330, 332).

2. The method of claim 1 wherein said one or more intent templates (200) are received from one or more applications (312).

3. The method of claims 1 or 2 wherein said determined one of said one or more intent templates (200) corresponds to at least one particular application (114, 116, 118, 312, 324).

4. The method of claim 3 wherein said determined one of said one or more intent templates (200), said one or more corresponding intent parameters (212-216) and said unrecognized or low confidence audio frames are sent to said at least one particular application (324).

5. The method of claims 3 or 4 wherein said additional information relative to said determined one of said one or more intent templates (200) or said one or more corresponding intent parameters (212-216), is requested by said at least one particular application (326).

6. The method of claims 1 or 5 wherein each of said one or more intent templates (200) comprises one or more intent parameter fields.

7. The method of claims 1 or 6 wherein said one or more corresponding intent parameters (212-216) maps to one or more intent parameter fields of said determined one of said one or more intent templates (200).

8. The method of claims 1 or 6 further comprising, comparing said recognized speech results to said one or more intent templates (200). (318, 320).

9. The method of claim 8 further comprising, selecting said one of said one or more intent templates (200) and said one or more corresponding intent parameters (212-216) based on said comparing (318, 320, 322).

10. The method of claims 1 or 9 further comprising, normalizing said recognized speech results to generate said one or more corresponding intent parameters (212-216). (320).

11. A conditional multipass automatic speech recognition system, the system comprising one or more processors or circuits which are operable to:
receive (130, 106) one or more intent templates (200), wherein an intent template specifies an intent (210) and comprises one or more fields that indicate parameters (212-216) an application utilizes to perform a function of the intent (312, 412, 512);
receive (120) a spoken utterance (124) and generate (120) one or more audio frames based on said spoken utterance;
compare (104) said one or more audio frames to a first grammar;
generate (104) recognized speech results based on said comparing;
bracket and collect (126) audio frames of said one or more audio frames, which are determined to be unrecognized or low confidence audio frames based on said comparing of said one or more audio frames to said first grammar;
determine, (106) based on said recognized speech results, one of said one or more intent templates (210) and one or more corresponding intent parameters (212-216); and
conditionally compare (110) only said bracketed and collected unrecognized or low confidence audio frames to a second grammar in instances when additional information relative to said one of said one or more intent templates (210) or one or more corresponding intent parameters (212-216), is requested (114, 106).

12. The system of claim 11 wherein said one or more intent templates (200) are received (130, 106) from one or more applications (114, 116, 118).

13. The system of claims 11 or 12 wherein said determined one of said one or more intent templates (200) corresponds to at least one particular application (114).

14. The system of claim 13 wherein said determined one of said one or more intent templates (200), said one or more corresponding intent parameters (212-216) and said unrecognized or low confidence audio frames are sent to said at least one particular application (114), or wherein said additional information relative to said determined one of said one or more intent templates (200) or said one or more corresponding intent parameters (212-216), is requested by said at least one particular application (114).

15. A computer readable medium comprising instructions for executing the method of any of claims 1-10.

## Patentansprüche

1. Ein Verfahren zur automatischen Spracherkennung mit bedingtem mehrfachen Durchlauf, wobei das Verfahren aufweist:
Empfangen einer oder mehrerer Absicht-Vorlagen (200), wobei eine Absicht-Vorlage eine Absicht (210) spezifiziert und ein oder mehrere Felder aufweist, die Parameter (212-216) angeben, die eine Anwendung zum Durchführen einer Funktion der Absicht nutzt (312, 412, 512);
Empfangen einer gesprochenen Äußerung und Erzeugen eines oder mehrerer Audiorahmen basierend auf der gesprochenen Äußerung (124, 120, 102, 314);
Vergleichen des einen oder der mehreren Audiorahmen mit einer ersten Grammatik (316, 104);
Erzeugen von erkannten Sprachresultaten basierend auf dem Vergleichen; Klammern und Sammeln von Audiorahmen des einen oder der mehreren Audiorahmen, die als nicht-erkannte Audiorahmen oder Audiorahmen mit niedrigem Vertrauen basierend auf dem Vergleichen des einen oder der mehreren Audiorahmen mit der ersten Grammatik bestimmt sind (316, 516);
Bestimmen, basierend auf den erkannten Sprachresultaten, einer der einen oder mehreren Absicht-Vorlagen (200) und eines oder mehrerer entsprechender Absicht-Parameter (212-216, 318, 320); und
bedingtes Vergleichen nur der geklammerten und gesammelten nicht-erkannten Audiorahmen oder Audiorahmen mit niedrigem Vertrauen mit einer zweiten Grammatik in Fällen, wenn zusätzliche Information in Bezug auf die eine der einen oder mehreren Absicht-Vorlagen (200) oder einen oder mehrere entsprechende Absicht-Parameter (212-216) angefordert wird (326, 330, 332).

2. Das Verfahren gemäß Anspruch 1, wobei die eine oder mehreren Absicht-Vorlagen (200) von einer oder mehreren Anwendungen empfangen werden (312).

3. Das Verfahren gemäß Anspruch 1 oder 2, wobei die bestimmte eine der einen oder mehreren Absicht-Vorlagen (200) zumindest einer bestimmten Anwendung entspricht (114, 116, 118, 312, 324).

4. Das Verfahren gemäß Anspruch 3, wobei die bestimmte eine der einen oder mehreren Absicht-Vorlagen (200), der eine oder die mehreren entsprechenden Absicht-Parameter (212-216) und die nicht-erkannten Audiorahmen oder Audiorahmen mit niedrigem Vertrauen an die zumindest eine bestimmte Anwendung gesendet werden (324).

5. Das Verfahren gemäß Anspruch 3 oder 4, wobei die zusätzliche Information in Bezug auf die bestimmte eine der einen oder mehreren Absicht-Vorlagen (200) oder den einen oder die mehreren entsprechenden Absicht-Parameter (212-216) von der zumindest einen bestimmten Anwendung angefordert wird (326).

6. Das Verfahren gemäß Anspruch 1 oder 5, wobei jede der einen oder mehreren Absicht-Vorlagen (200) ein oder mehrere Absicht-Parameter-Felder aufweist.

7. Das Verfahren gemäß Anspruch 1 oder 6, wobei der eine oder die mehreren entsprechenden Absicht-Parameter (212-216) einem oder mehreren Absicht-Parameter-Feldern der bestimmten einen der einen oder mehreren Absicht-Vorlagen (210) zugeordnet werden.

8. Das Verfahren gemäß Anspruch 1 oder 6, das weiter aufweist ein Vergleichen der erkannten Sprachresultate mit der einen oder den mehreren Absicht-Vorlagen (200) (318, 320).

9. Das Verfahren gemäß Anspruch 8, das weiter aufweist ein Auswählen der einen der einen oder mehreren Absicht-Vorlagen (200) und des einen oder der mehreren entsprechenden Absicht-Parameter (212-216) basierend auf dem Vergleichen (318, 320, 322).

10. Das Verfahren gemäß Anspruch 1 oder 9, das weiter ein Normalisieren der erkannten Sprachresultate aufweist, um den einen oder die mehreren entsprechenden Absicht-Parameter (212-216) zu erzeugen (320).

11. Ein automatisches Spracherkennungssystem mit bedingtem mehrfachen Durchlauf, wobei das System einen oder mehrere Prozessoren oder Schaltungen aufweist, die betriebsfähig sind zum:
Empfangen (130, 106) einer oder mehrerer Absicht-Vorlagen (200), wobei eine Absicht-Vorlage eine Absicht (210) spezifiziert und ein oder mehrere Felder aufweist, die Parameter (212-216) angeben, die eine Anwendung zum Durchführen einer Funktion der Absicht nutzt (312, 412, 512);
Empfangen (120) einer gesprochenen Äußerung (124) und Erzeugen (120) eines oder mehrerer Audiorahmen basierend auf der gesprochenen Äußerung;
Vergleichen (104) des einen oder der mehreren Audiorahmen mit einer ersten Grammatik;
Erzeugen (104) von erkannten Sprachresultaten basierend auf dem Vergleichen;
Klammern und Sammeln (126) von Audiorahmen des einen oder der mehreren Audiorahmen, die als nicht-erkannte Audiorahmen oder Audiorahmen mit niedrigem Vertrauen basierend auf dem Vergleichen des einen oder der mehreren Audiorahmen mit der ersten Grammatik bestimmt sind;
Bestimmen (106), basierend auf den erkannten Sprachresultaten, einer der einen oder mehreren Absicht-Vorlagen (210) und eines oder mehrerer entsprechender Absicht-Parameter (212-216); und
bedingtes Vergleichen (110) nur der geklammerten und gesammelten nicht-erkannten Audiorahmen oder Audiorahmen mit niedrigem Vertrauen mit einer zweiten Grammatik in Fällen, wenn zusätzliche Information in Bezug auf die eine der einen oder mehreren Absicht-Vorlagen (210) oder einen oder mehrere entsprechende Absicht-Parameter (212-216) angefordert wird (114, 106).

12. Das System gemäß Anspruch 11, wobei die eine oder mehreren Absicht-Vorlagen (200) von einer oder mehreren Anwendungen (114, 116, 118) empfangen werden (130, 106).

13. Das System gemäß Anspruch 11 oder 12, wobei die bestimmte eine der einen oder mehreren Absicht-Vorlagen (200) zumindest einer bestimmten Anwendung (114) entspricht.

14. Das System gemäß Anspruch 13, wobei die bestimmte eine der einen oder mehreren Absicht-Vorlagen (200), der eine oder die mehreren entsprechenden Absicht-Parameter (212-216) und die nicht-erkannten Audiorahmen oder Audiorahmen mit niedrigem Vertrauen an die zumindest eine bestimmte Anwendung gesendet werden (114), oder wobei die zusätzliche Information in Bezug auf die bestimmte eine der einen oder mehreren Absicht-Vorlagen (200) oder den einen oder die mehreren entsprechenden Absicht-Parameter (212 - 216) von der zumindest einen bestimmten Anwendung (114) angefordert wird.

15. Ein computerlesbares Medium, das Anweisungen zum Ausführen des Verfahrens gemäß einem der Ansprüche 1-10 aufweist.

## Revendications

1. Procédé de reconnaissance automatique, multipasse, conditionnelle de la parole, le procédé comprenant les étapes suivantes :
recevoir un ou plusieurs modèle(s) d'intention(s) (200), dans lequel un modèle d'intention spécifie une intention (210) et comprend un ou plusieurs champ(s) qui indique(nt) des paramètres (212 à 216) qu'utilise une application pour exécuter une fonction de l'intention (312, 412, 512) ;
recevoir un énoncé oral et produire une ou plusieurs trame(s) audio sur la base dudit énoncé oral (124, 120, 102, 314) ;
comparer lesdites une ou plusieurs trame(s) audio à une première grammaire (316, 104) ;
produire des résultats de parole reconnue sur la base de ladite comparaison ;
délimiter et collecter des trames audio desdites une ou plusieurs trame(s) audio, qui sont déterminées comme étant des trames audio non reconnues ou à faible degré de confiance, sur la base de ladite comparaison desdites une ou plusieurs trame(s) audio à ladite première grammaire (316, 516) ;
déterminer, sur la base desdits résultats de parole reconnue, l'un desdits un ou plusieurs modèle(s) d'intention (s) (200) et un ou plusieurs paramètre(s) d'intention correspondant(s) (212 à 216, 318, 320) ; et
ne comparer conditionnellement que lesdites trames audio non reconnues ou à faible degré de confiance délimitées et collectées, à une seconde grammaire dans des cas où des informations supplémentaires relatives audit un desdits un ou plusieurs modèle(s) d'intentions (200) ou à un ou plusieurs desdits paramètres d'intention correspondant(s) (212 à 216) sont demandées (326, 330, 332) .

2. Procédé selon la revendication 1, dans lequel lesdits un ou plusieurs modèle(s) d'intention(s) (200) sont reçus en provenance d'une ou de plusieurs application(s) (312) .

3. Procédé selon la revendication 1 ou 2, dans lequel ledit modèle déterminé desdits un ou plusieurs modèle(s) d'intention(s) (200) correspond à au moins une application particulière (114, 116, 118, 312, 324).

4. Procédé selon la revendication 3, dans lequel ledit modèle déterminé desdits un ou plusieurs modèle(s) d'intention (s) (200), lesdits un ou plusieurs paramètre(s) d'intention correspondant(s) (212 à 216) et lesdites trames audio non reconnues ou à faible degré de confiance sont envoyés à ladite au moins une application particulière (324) .

5. Procédé selon la revendication 3 ou 4, dans lequel lesdites informations supplémentaires relatives audit modèle déterminé desdits un ou plusieurs modèle(s) d'intention(s) (200) ou auxdits un ou plusieurs paramètre(s) d'intention correspondant(s) (212 à 216) sont demandées par ladite au moins une application particulière (326).

6. Procédé selon la revendication 1 ou 5, dans lequel chaque modèle desdits un ou plusieurs modèle(s) d'intention(s) (200) comprend un ou plusieurs champ(s) de paramètre(s) d'intention.

7. Procédé selon la revendication 1 ou 6, dans lequel lesdits un ou plusieurs paramètre(s) d'intention correspondant(s) (212 à 216) sont mappés sur un ou plusieurs champ(s) de paramètre(s) d'intention dudit modèle déterminé desdits un ou plusieurs modèle(s) d'intention(s) (200) .

8. Procédé selon la revendication 1 ou 6, comprenant en outre la comparaison desdits résultats de parole reconnue auxdits un ou plusieurs modèle(s) d'intention(s) (200), (318, 320).

9. Procédé selon la revendication 8, comprenant en outre la sélection dudit modèle desdits un ou plusieurs modèle(s) d'intention(s) (200) et desdits un ou plusieurs paramètre(s) d'intention correspondant(s) (212 à 216) sur la base de ladite comparaison (318, 320, 322).

10. Procédé selon la revendication 1 ou 9, comprenant en outre la normalisation desdits résultats de parole reconnue pour produire lesdits un ou plusieurs paramètre(s) d'intention correspondant(s) (212 à 216), (320).

11. Système de reconnaissance automatique, multipasse, conditionnelle de la parole, le système comprenant un ou plusieurs processeur(s) ou circuit(s) qui permet ou permettent de :
recevoir (130, 106) un ou plusieurs modèle(s) d'intention(s) (200), dans lequel un modèle d'intention spécifie une intention (210) et comprend un ou plusieurs champ(s) qui indique(nt) des paramètres (212 à 216) qu'utilise une application pour exécuter une fonction de l'intention (312, 412, 512) ;
recevoir (120) un énoncé oral (124) et produire (120) une ou plusieurs trame(s) audio sur la base dudit énoncé oral ;
comparer (104) lesdites une ou plusieurs trame(s) audio à une première grammaire ;
produire (104) des résultats de parole reconnue sur la base de ladite comparaison ;
délimiter et collecter (126) des trames audio desdites une ou plusieurs trame(s) audio, qui sont déterminées comme étant des trames audio non reconnues ou à faible degré de confiance, sur la base de ladite comparaison desdites une ou plusieurs trame(s) audio à ladite première grammaire ;
déterminer (106), sur la base desdits résultats de parole reconnue, l'un desdits un ou plusieurs modèle(s) d'intention(s) (210) et un ou plusieurs paramètre(s) d'intention correspondant(s) (212 à 216) ; et
ne comparer conditionnellement (110) que lesdites trames audio non reconnues ou à faible degré de confiance délimitées et collectées, à une seconde grammaire dans des cas où des informations supplémentaires relatives audit un desdits un ou plusieurs modèle(s) d'intention(s) (210) ou à un ou plusieurs paramètre(s) d'intention correspondant(s) (212 à 216) sont demandées (114, 106).

12. Système selon la revendication 11, dans lequel lesdits un ou plusieurs modèle(s) d'intention(s) (200) sont reçus (130, 106) en provenance d'une ou de plusieurs application(s) (114, 116, 118).

13. Système selon la revendication 11 ou 12, dans lequel ledit modèle déterminé desdits un ou plusieurs modèle(s) d'intention(s) (200) correspond à au moins une application particulière (114).

14. Système selon la revendication 13, dans lequel ledit modèle déterminé desdits un ou plusieurs modèle(s) d'intention (s) (200), lesdits un ou plusieurs paramètre(s) d'intention correspondant(s) (212 à 216) et lesdites trames audio non reconnues ou à faible degré de confiance sont envoyés à ladite au moins une application particulière (114), ou dans lequel lesdites informations supplémentaires relatives audit modèle déterminé desdits un ou plusieurs modèle(s) d'intention(s) (200) ou auxdits un ou plusieurs paramètre(s) d'intention correspondant(s) (212 à 216) sont demandées par ladite au moins une application particulière (114) .

15. Support lisible par ordinateur, comprenant des instructions destinées à mettre en oeuvre le procédé selon l'une quelconque des revendications 1 à 10.
